Europäisches Patentamt

**European Patent Office**

Office européen des brevets

(11) Publication number:

**0 232 939**
**B1**

(12) **EUROPEAN PATENT SPECIFICATION**

(45) Date of publication of the patent specification:
05.09.90

(21) Application number: **87200130.0**

(22) Date of filing: **28.01.87**

(51) Int. Cl.⁵: **G01N 21/49**

(54) Method and device for determining the quantity of dispersed solid material in a liquid.

(30) Priority: **29.01.86 NL 8600209**

(43) Date of publication of application:
**19.08.87 Bulletin 87/34**

(45) Publication of the grant of the patent:
**05.09.90 Bulletin 90/36**

(84) Designated Contracting States:
**AT BE CH DE ES FR GB GR IT LI LU NL SE**

(56) References cited:
**FR-A- 2 123 948**
**FR-A- 2 567 645**

**PATENT ABSTRACTS OF JAPAN, vol. 9,**
**no. 262 (P-398)[1985], 19th October 1985; &**
**JP-A-60 111 943 (AJINOMOTO K.K.) 18-06-1985**
**PATENT ABSTRACTS OF JAPAN, vol. 9,**
**no. 265 (P-399)[1988], 23rd October 1985; &**
**JP-A-60 113 131 (MITSUBISHI DENKI K.K.) 19-06-1985**

(73) Proprietor: **NEDERLANDSE ORGANISATIE VOOR TOEGEPAST-NATUURWETENSCHAPPELIJK ONDERZOEK TNO, Juliana van Stolberglaan 148, NL-2595 CL The Hague(NL)**

(72) Inventor: **Houpt, Pieter Marcus, Timorstraat 119, NL-2585 SE Den Haag(NL)**

(74) Representative: **van der Beek, George Frans, Ir. et al, Nederlandsch Octrooibureau Scheveningseweg 82 P.O. Box 29720, NL-2502 LS 's-Gravenhage(NL)**

ACTORUM AG

## Description

The invention relates to a method and device for determining the quantity of dispersed solid material in a liquid.

In various chemical and biochemical processes solid material is formed which is dispersed in a reaction liquid. Thus, in biotechnological fermentation processes, micro-organisms are cultivated. It is of great importance that such processes are optimally regulated, for which purpose measurements are necessary. In addition, inter alia, the oxygen content, the degree of acidity, the carbon dioxide content, the temperature and the content of other substances, it is often of importance to determine the quantity of solid substances, which are, in the case of a fermentation process, micro-organisms and/or substances excreted by micro-organisms, and which are contained in the reactor vessel. It is usual to take samples from the vessel and to determine the quantity of solid substance by chemical, electrical, microscopic or photometric methods, or by weighing. Taking samples is beset with a number of drawbacks. A relatively large amount of time is lost between taking a sample and the measurement so that the information obtained may be unreliable or is no longer relevant. Moreover, taking a sample is risky in certain cases because infectious microbes might get into the reactor vessel. There is therefore a strong preference for carrying out measurements not on samples but in the reactor vessel itself.

In order to obtain satisfactory results for measurements in the vessel, the method of measurement or measuring device will have to satisfy a number of conditions. The sensor must be biologically and/or chemically inert and must be capable of being sterilized at approximately 120°C. It must be possible to avoid or correct contamination and build-up of solid constituents on interface surfaces which play a part in the measurement. The cost has to be low. It must be possible to achieve a reasonable measurement result even with a relatively high density of the dispersed solid constituents. The sensor must be able to function in coloured and turbulent solutions.

FR-A 2 123 948 discloses a method for determining the quantity of dispersed material in a liquid comprising: passing a beam of light into the liquid through a gas-liquid interface window, passing light scattered in the liquid through a gas-liquid interface window to the detector, and continuously leading a gas flow to the gas-liquid interfaces. The sensor for passing beam of light into the liquid and the sensor for passing light scattered in the liquid to a detector comprise an internal chamber into which there debouch a gas inlet chamber, a gas removal channel and light guiding means. The gas flow prevents the light guiding means (glass fibre) to come in contact with the liquid; the gas-liquid interface lies in the gas removal channel, which means that the meniscus is indefinite and the signal to be obtained will be instable.

The object of the invention is to eliminate this drawback and therefore the above-mentioned method is characterized in that the gas flows are discharged through separate gas removal channels through which the light beam and the scattered light to the detector respectively do not pass, and that periodically the gas pressure is increased so that the meniscus of said gas-liquid interfaces is renewed.

The device according to the invention is characterized in that said gas removal channel has such a staggered position with respect to the light guiding means that neither the light beam on its way to the liquid nor the scattered light on its way to the detector, pass as through the removal channel and that opposite the light guiding means a separate channel for forming a meniscus debouches into said internal chamber.

Although the device for passing a beam of light into the liquid and the device for passing scattered light to a detector can be separate, it is preferred that the device is also provided with a second internal channel into which there debouch a gas inlet channel, a light guiding means, a gas removal channel and opposite to the light guiding means a separate channel for forming a meniscus debouches into the internal chamber, the gas removal channel having such a staggered position with respect to the light guiding means that neither the light beam on its way to the liquid nor the scattered light on its way to the detector passes through the gas removal channel.

The gas in the channel will be connected with means by which the gas pressure may be increased periodically.

The gas inlet system debouching into the or each gas inlet channel preferably comprises two parallel gas pipes each having its own valve.

The debouchments of the gas inlet channel, the gas removal channel and the meniscus channel are below the level of the light guiding means, whereas the light guiding means is disposed in a gastight manner.

FR-A 2 567 645 discloses a device for measuring the turbidity of a liquid comprising an optical fibre and a measuring cell. The cell includes the liquid to be analysed. The glass plate between the end of the fibre and the cell is periodically cleaned by a gas flow.

The invention will now be explained in more detail by reference to the figures in which an exemplary embodiment is shown.

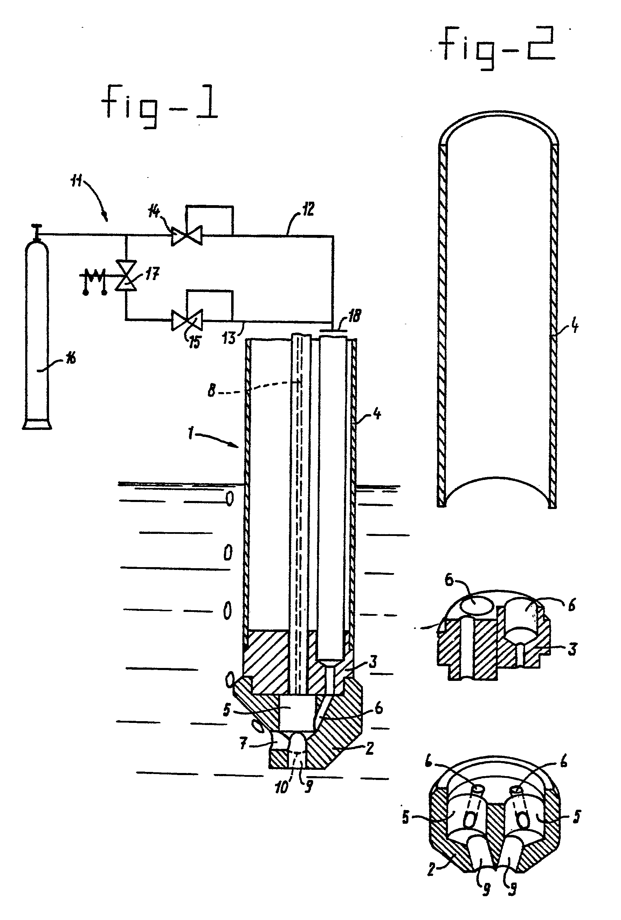

Figure 1 shows a section through a device, having a gas inlet system, for determining the quantity of dispersed solid material in a liquid.

Figure 2 shows the device in Figure 1 in the dismantled state.

The device shown is intended for determining, in a liquid present in a reactor and containing a quantity of dispersed solid material, how large said quantity of solid material is. The principle of the method of measurement is that a beam of light is passed into the liquid, that the light is scattered by the dispersed particles, and that the scattering of the light by the liquid is determined by means of a detector, said scattering being a measure of the quantity of solid material in the liquid. The device is, in particular, suitable for determining the density of bacteria in biological processes. Use in normal chemical reactions is, however, not ruled out. Measurement can be carried out continuously or with short breaks. The device is suitable for use in the reactor itself and there is no need for sampling.

The device comprises a sensor 1 which is immersed in the liquid and consists of a measuring head 2, an adapter 3, and a stainless-steel tube 4. The measuring head 2 has two chambers 5 into which there debouch a gas inlet channel 6, a gas removal channel 7, a channel containing a light-guiding glass fibre 8 and a channel for forming a meniscus 10 which is indicated by dotted lines.

The one glass fibre 8 is connected to a laser device (not shown), while the other glass fibre is connected to a detector (not shown) which can convert the light signal into an electrical signal.

The gas inlet pipes are connected to a system 11 for supplying gas, for example nitrogen, which system comprises two parallel pipes, connected to a gas bottle 16, each having a needle valve 14 or 15 respectively. The pipe 13 also incorporates a magnetic valve 17 with which the ratio of the quantities of gases flowing through the pipes 12, 13 can be regulated. A bacteria filter 18 is incorporated between the system 11 and each of the gas supply pipes 6.

The device functions as follows:

Gas is conveyed via pipe 13 to the gas inlet channel 6. The valve 14 is closed so that line 12 is inoperative. Said gas flows into the chamber 5 and leaves the latter through channel 7. At the interface between gas and liquid a meniscus 10 is formed beneath each channel 5. A laser beam is passed through a glass fibre 8, a chamber 9, and a meniscus 10 into the liquid in which the quantity of dispersed solid material has to be measured. The light incident in the liquid is scattered by the particles and a portion of the scattered light falls, through the other meniscus 10, the other chamber 9 and the other glass fibre 8, onto a detector which delivers an electrical signal as a function of the quantity of reflected light which may be a measure of solid particles, such as cells, dispersed in the liquid. After suitable calibration of the detector it is possible to determine immediately how many solid particles are contained in the liquid at any instant.

The meniscuses are subject to contamination by the build-up of solid particles. They must therefore be cleaned or renewed at intervals. For this purpose the valve 14 is opened periodically, as a result of which the gas flows into the pipes 6 also through the pipe 12 in addition to flowing through the pipe 13. The pressure in the chambers 5 becomes so great that gas escapes also through the channels 9 in addition to escaping through the channels 7, so that the mensicuses disappear. As soon as the valve 14 is closed, the meniscuses re-establish themselves at the desired point in the channels 9.

It is essential to the invention that a quantity of gas is contained between the end of the glass fibres 8 directed towards the chamber 5 and the liquid to be investigated so that there is liquid-gas interface. A variant in which the gas formed in the chambers 5 always leaves the measuring head completely through the channel 9 does not fall within the scope of the invention. In fact, the gas bubbles produced under these conditions form a disturbing factor because they are situated in the beam of incident light. The embodiment shown, in which gas is only periodically forced through the channels 9, is therefore to be preferred.

Of course, separate sensors could be used for passing a light beam into the liquid and passing the scattered light to the detector.

Important advantages are, inter alia, that the sensor can be sterilized and is insensitive to the build-up of solid particles. Even very large particle densities can be determined. A satisfactory sensivity can be achieved. The cost is low. It can be established by calculation that, under certain circumstances, there is a linear relationship between the particle concentration in the liquid and the scattering intensity of the light.

Various embodiments are possible within the scope of the invention. There is the possibility that, in the case of a fermentation process in which methane is liberated, said methane is used instead of nitrogen to fill the chamber 5. In said case the methane will be pumped round by a pump.

**Claims**

1. Method for determining the quantity of dispersed material in a liquid comprising: passing a beam of light into the liquid through a gas-liquid interface window, passing light scattered in the liquid through a gas-liquid interface window to a detector, and continuously leading a gas flow to the gas-liquid interfaces, characterized in that the gas flows are discharged through separate gas removal channels through which the light beam and the scattered light to the detector respectively do not pass, and that periodically the gas pressure is increased so that the meniscus of said gas-liquid interface is renewed.

2. Device for passing a beam of light into a liquid and passing light scattered by the liquid to a detector comprising an internal chamber (5) into which there debouch at least a gas inlet channel (6), a gas removal channel (7) and light guiding means (8), characterized in that said gas removal channel (7) has such a staggered position with respect to the light guiding means (8) that neither the light beam on its way to the liquid nor the scattered light on its way to the detector, passes through the gas removal channel (7) and that opposite the light guiding means (8) a separate channel (9) for forming a meniscus (10) debouches into said internal chamber (5).

3. Device according to claim 2, characterized in that it is also provided with a second internal chamber (5) into which there debouch a gas inlet channel (6), a light guiding means (8), a gas removal channel (7) and opposite to the light guiding means (8) a separate channel (9) for forming a meniscus (10), the gas removal channel (7) having such a staggered position with respect to the light guiding means (8) that neither the light beam on its way to the liquid nor the scattered light on its way to the detector, passes through the gas removal channel (7).

4. Device according to claim 2 or 3, characterized in that said gas inlet channel (7) is connected with means (11 to 15) by which the gas pressure may be increased periodically.

5. Device according to claim 4, characterized in that the gas inlet system (11) debouching into the or each gas inlet channel (6) comprises two parallel gas pipes (12, 13) each having its own valve (14, 15).

6. Device according to one of claims 2–5, characterized in that the debouchments of the gas inlet channel (6), the gas removal channel (7) and the meniscus channel (9) are below the level of the light guiding means (8), and that the light guiding means (8) is disposed in a gastight manner.

## Patentansprüche

1. Verfahren zum Bestimmen der Menge von in einer Flüssigkeit dispergiertem Material mit: Einleiten eines Lichtstrahls in die Flüssigkeit durch ein Gas-Flüssigkeit-Grenzschichtfenster, Leiten von in der Flüssigkeit gestreutem Licht durch ein Gas-Flüssigkeit-Grenzschichtfenster auf einen Detektor und kontinuierlichem Zuführen eines Gasstroms zu den Gas-Flüssigkeit-Grenzschichten, dadurch gekennzeichnet, daß die Gasströme durch getrennte Gasentnahmekanäle abgegeben werden, durch die weder der Lichtstrahl noch das gestreute Licht zu dem Detektor hindurchgeleitet wird, und daß periodisch der Gasdruck erhöht wird, so daß der Meniskus der Gas-Flüssigkeit-Grenzschichten erneuert wird.

2. Vorrichtung zum Einleiten eines Lichtstrahls in eine Flüssigkeit und Leiten von durch die Flüssigkeit gestreutem Licht zu einem Detektor mit einer Innenkammer (5), in die mindestens ein Gaseinlaßkanal (6), ein Gasabgabekanal (7) und eine Lichtführungseinrichtung (8) mündet, dadurch gekennzeichnet, daß der Gasabgabekanal (7) eine derart versetzte Position in Bezug auf die Lichtführungseinrichtung (8) aufweist, daß weder der Lichtstrahl auf seinem Weg in die Flüssigkeit noch das gestreute Licht auf seinem Weg zum Detektor durch den Gasabgabekanal (7) führt und daß gegenüber den Lichtführungseinrichtungen (8) ein getrennter Kanal (9) zum Bilden eines Meniskusses (10) in die Innenkammer (5) mündet.

3. Vorrichtung nach Anspruch 2, dadurch gekennzeichnet, daß außerdem eine zweite Innenkammer (5) vorgesehen ist, in die ein Gaseinlaßkanal (6), eine Lichtführungseinrichtung (8), ein Gasabgabekanal (7) und gegenüber der Lichtführungseinrichtung (8) ein getrennter Kanal (9) zum Bilden eines Meniskusses (10) münden, wobei der Gasabgabekanal (7) in Bezug auf die Lichtführungseinrichtung (8) eine derart versetzte Position aufweist, daß weder der Lichtstrahl auf seinem Weg in die Flüssigkeit noch das gestreute Licht auf seinem Weg zu dem Detektor durch den Gasabgabekanal (7) führt.

4. Vorrichtung nach Anspruch 2 oder 3, dadurch gekennzeichnet, daß der Gaseinlaßkanal (6) mit Einrichtungen (11 bis 15) verbunden ist, mit denen der Gasdruck periodisch erhöht werden kann.

5. Vorrichtung nach Anspruch 4, dadurch gekennzeichnet, daß das in den oder jeden Gaseinlaßkanal (6) mündende Einlaßsystem (11) zwei parallele Gasrohre (12, 13) aufweist, die jeweils ein eigenes Ventil (14, 15) aufweisen.

6. Vorrichtung nach einem der Ansprüche 2 bis 5, dadurch gekennzeichnet, daß die Mündungen des Gaseinlaßkanals (6), des Gasabgabekanals (7) und des Meniskuskanals (9) unterhalb des Niveaus der Lichtführungseinrichtungen (8) sind und daß die Lichtführungseinrichtungen (8) in einer gasdichten Weise angeordnet sind.

## Revendications

1. Méthode de détermination de la quantité de matières dispersées dans un liquide, constitué en ce que l'on fait passer un faisceau lumineux à travers le liquide, à travers une fenêtre d'interface gaz-liquide, que l'on fait passer la lumière dispersée dans le liquide à travers une fenêtre d'interface gaz-liquide pour l'amener à un détecteur et que l'on amène en continu un courant gazeux aux interfaces gaz-liquide, caractérisé en ce que les courants gazeux sont évacués à travers des conduits d'évacuation de gaz séparés, à travers lesquels le faisceau lumineux et la lumière dispersée amenés aux détecteurs respectifs ne peuvent passer et en ce que périodiquement la pression gazeuse est accrue de sorte que le ménisque desdites interfaces gaz-liquide soit renouvelé.

2. Dispositif pour faire passer un faisceau lumineux à travers un liquide et faire passer la lumière dispersée par le liquide pour l'amener à un détecteur, comprenant une chambre intérieure (5) dans laquelle débouche au moins un conduit d'amenée de gaz (6), un conduit d'évacuation de gaz (7) et des moyens guide-lumière (8), caractérisé en ce que ledit conduit d'évacuation de gaz présente une position décalée par rapport au moyen guide-lumière (8) tel que ni le faisceau lumineux sur son trajet vers le liquide, ni la lumière dispersée sur son trajet vers le détecteur ne passent à travers le conduit d'évacuation de gaz (7) et qu'à l'opposé du moyen guide-lumière (8), un conduit séparé (9) destiné à former un ménisque (10) débouche dans ladite chambre intérieure (5).

3. Dispositif selon la revendication 2, caractérisé en ce qu'il est également muni d'une seconde chambre intérieure (5) dans laquelle débouche un conduit d'amenée de gaz (6), un moyen guide-lumière (8), un conduit d'évacuation de gaz (7) et, face au moyen guide-lumière (8), un conduit séparé (9), destiné à former un ménisque (10), le conduit d'évacuation de gaz (7) ayant une position décalée par rapport au moyen guide-lumière (8) tel que ni le faisceau lumineux sur son trajet vers le liquide ni la lumière dispersée sur son trajet vers le détecteur ne passent à travers le conduit d'évacuation de gaz (7).

4. Dispositif selon la revendication 2 ou 3, caractérisé en ce que ledit conduit d'amenée de gaz (6) est raccordé à des moyens (11) à (15) permettant d'élever périodiquement la pression gazeuse.

5. Dispositif selon la revendication 4, caractérisé en ce que le système d'amenée de gaz (11), débouchant dans le ou dans chaque conduit d'amenée de gaz (6), comprend deux conduits de gaz parallèles (12, 13) ayant chacun sa propre soupape (14, 15).

6. Dispositif selon l'une quelconque des revendications 2 à 5, caractérisé en ce que les embouchures des conduits d'amenée de gaz (6), de conduits d'évacuation de gaz (7) et de conduits de ménisques (9) sont situées en-dessous du niveau du moyen guide-lumière (8), et que le moyen guide-lumière (8) est disposé d'une manière étanche au gaz.

fig-1

fig-2